# EUROPEAN PATENT APPLICATION

(11) **EP 4 529 027 A1**
(43) Date of publication of application: **26.03.2025**
(21) Application number: 23876446.8
(22) Date of filing: 12.09.2023
(51) Int. Cl.: H04B 3/54

(54) **DEVICE CONTROL METHOD AND APPARATUS**

(30) Priority: 12.10.2022 CN 202211249776
(71) Applicant: Huawei Technologies Co., Ltd., Shenzhen, Guangdong 518129 (CN)
(72) Inventor: REN, Zhenxing, Shenzhen, Guangdong 518129 (CN); WANG, Weigang, Shenzhen, Guangdong 518129 (CN)
(74) Representative: Körber, Martin Hans
(86) International application number: PCT/CN2023/118399
(87) International publication number: WO 2024/078241

(57) **Abstract**

A device control method and an apparatus are provided, to increase a success rate of controlling a controlled device by a control device. The method includes: The control device generates a PLC control instruction based on n target controlled devices, where the PLC control instruction includes k bits, values assigned to n bits that are in the k bits and that correspond to the n target controlled devices are a first preset value, and a value assigned to a bit other than the n bits in the k bits is a second preset value. The control device broadcasts the PLC control instruction. Each controlled device determines, based on a value assigned to a bit corresponding to the controlled device in the PLC control instruction, whether the controlled device is a target controlled device, where n and m are positive integers, and k is a preset integer greater than or equal to m. The n target controlled devices are n controlled devices in m controlled devices, and the control device is wiredly connected to the m controlled devices by using a PLC technology.

## Description

### CROSS-REFERENCE TO RELATED APPLICATIONS

This application claims priority to Chinese Patent Application No. 202211249776.8, filed with the China National Intellectual Property Administration on October 12, 2022, and entitled "DEVICE CONTROL METHOD AND APPARATUS", which is incorporated herein by reference in its entirety.

### TECHNICAL FIELD

This application relates to the terminal field, and in particular, to a device control method and an apparatus.

### BACKGROUND

With development of the whole-house smart home industry, more smart sub-devices (namely, controlled devices) access a smart home system. The smart home system includes a control device and a plurality of controlled devices. The plurality of controlled devices include, for example, a lamp, a switch, a television, and an air conditioner. The control device is configured to control the plurality of controlled devices. In the current smart home system, a wireless (for example, a wireless local area network (wireless local area network, WLAN) or Bluetooth) connection manner is usually used. For example, the control device sends a WLAN control signal to the plurality of controlled devices, and the plurality of controlled devices perform corresponding actions based on the received WLAN control signal.

However, a penetration capability of a wireless signal is weak. It is assumed that the control device and a controlled device are not in a same room (for example, there is a wall between the control device and the controlled device). In this case, when the control device controls the controlled device through a wireless signal, the wireless signal may not be successfully received by the controlled device, that is, the control fails.

### SUMMARY

This application provides a device control method and an apparatus, to increase a success rate of controlling a controlled device by a control device.

According to a first aspect, a device control method is provided, and is applicable to a control system. The control system includes a control device and m controlled devices. The control device is wiredly connected to the m controlled devices by using a power line communication (power line communication, PLC) technology, and m is a positive integer. In this way, the control device and the controlled device may perform wired communication according to a PLC protocol, so that an anti-interference capability is strong, and a success rate of controlling the controlled device by the control device is increased.

The method includes: The control device determines n target controlled devices. The n target controlled devices are n controlled devices in the m controlled devices, n is a positive integer, and n is not greater than m. Then, the control device generates a PLC control instruction. The PLC control instruction includes k bits. Values assigned to n bits that are in the k bits and that correspond to the n target controlled devices are a first preset value, and a value assigned to a bit other than the n bits in the k bits is a second preset value. The first preset value is different from the second preset value, and k is a preset integer greater than or equal to m. The control device broadcasts the PLC control instruction. Correspondingly, each of the m controlled devices can receive the PLC control instruction that is broadcast by the control device. Each controlled device may determine, based on a value assigned to a bit corresponding to the controlled device in the PLC control instruction, whether the controlled device is a target controlled device. For example, the first preset value is equal to 1, and the second preset value is equal to 0.

In the foregoing technical solution, the PLC control instruction includes the k bits, and each controlled device may correspond to a respective bit in the k bits. Further, a value assigned to the bit corresponding to each controlled device may indicate whether the controlled device is a target controlled device controlled by the current PLC control instruction. In this case, a device address of the controlled device does not need to be carried in the PLC control instruction. This helps reduce a packet length of the PLC control instruction.

In a possible implementation, that the control device determines the n target controlled devices may be specifically as follows: The mobile device generates, based on an operation of a user, a user instruction corresponding to the operation, and correspondingly, the control device receives the user instruction from the mobile device, where the user instruction includes identifiers of the n target controlled devices. The control device determines the n target controlled devices based on the identifiers of the n target controlled devices. In this way, the control device determines, according to the user instruction, the n target controlled devices indicated by the user instruction, thereby improving flexibility of the operation of the user.

In a possible implementation, that the control device generates the PLC control instruction may be specifically: The control device generates the PLC control instruction based on device addresses of the n target controlled devices and mapping information. The mapping information indicates m bits that are in the k bits and that respectively correspond to device addresses of the m controlled devices. In this way, the control device may determine, based on the mapping information, the first preset value is assigned to which bit and the second preset value is assigned to which bit in the k bits included in the PLC control instruction, so that which controlled device is the target controlled device can be indicated by using the k bits. The packet length of the PLC control instruction is reduced on the premise that the target controlled device is accurately indicated.

In a possible implementation, before the control device generates the PLC control instruction, each of the m controlled devices further sends an identifier (for example, a medium access control (medium access control, MAC) address or a product serial number (serial number, SN)) of the controlled device to the control device. Correspondingly, the control device receives the identifier of each of the m controlled devices, and generates, based on the identifier of each controlled device, a device address corresponding to each device. Then, the control device determines a bit that is in the k bits and that corresponds to the device address of each controlled device, and establishes the mapping information based on the bit that is in the k bits and that corresponds to the device address of each of the m controlled devices. In this way, the control device may set, based on the bit corresponding to the device address of the controlled device in the mapping information, a value assigned to the bit in the PLC control instruction, to indicate whether the controlled device is the target controlled device.

In a possible implementation, after determining the bit that is in the k bits and that corresponds to the device address of the controlled device, the control device further sends the device address of the controlled device and location indication to the controlled device. Correspondingly, the controlled device receives the device address of the controlled device and the location indication from the control device. The location indication indicates the bit that is in the k bits and that corresponds to the device address of the controlled device. In this way, after receiving the PLC control instruction that is broadcast by the control device, the controlled device may determine, based on the device address of the controlled device, which bit in the PLC control instruction is a bit corresponding to the controlled device, and further determine, based on the determined bit, whether the controlled device is the target controlled device.

In a possible implementation, the controlled device further sends capability information of the controlled device to the control device, in other words, the control device further receives the capability information of each controlled device. The capability information indicates that the controlled device has a capability of parsing the PLC control instruction. The control device may further determine, based on the capability information of the controlled device, whether to allocate a bit in the PLC control instruction to the controlled device. In this way, the control device may select a controlled device that has a capability of parsing the PLC control instruction, and indicate, by using the PLC control instruction including the k bits, whether the controlled device is the target controlled device, to avoid a case in which some controlled devices that do not have the capability of parsing the PLC control instruction after receiving the PLC control instruction, and then the control fails.

In a possible implementation, before generating the PLC control instruction, the control device further determines that the quantity n of target controlled devices is greater than a threshold. The threshold is determined based on the total quantity k of bits in the PLC control instruction and a quantity of bits of the device addresses of the controlled devices. Specifically, the control device may first determine the quantity n of target controlled devices. When the quantity n is less than or equal to the threshold, the PLC control instruction generated by the control device includes the device addresses of the n target controlled devices. When the quantity n is greater than the threshold, the PLC control instruction generated by the control device includes values of the k bits. In this way, the packet length of the PLC control instruction can be reduced on the premise that the target controlled device is correctly indicated.

In a possible implementation, when determining, based on the value assigned to the bit corresponding to the controlled device in the PLC control instruction, whether the controlled device is the target controlled device, the controlled device is specifically configured to: determine, based on the location indication from the control device, the value assigned to the bit that is in the k bits and that corresponds to the device address of the controlled device; and when determining that the value assigned to the bit that is in the k bits and that corresponds to the device address of the controlled device is the first preset value, determine that the controlled device is the target controlled device; or when determining that the value assigned to the bit that is in the k bits and that corresponds to the device address of the controlled device is the second preset value, determine that the controlled device is not the target controlled device.

According to a second aspect, a control device is provided, including a processor and a memory. The memory is configured to store a computer program, and the processor is configured to execute the computer program stored in the memory, so that the control device performs a function of the control device in the first aspect or any possible implementation of the first aspect.

According to a third aspect, a controlled device is provided, including a processor and a memory. The memory is configured to store a computer program, and the processor is configured to execute the computer program stored in the memory, so that the controlled device performs a function of the controlled device in the first aspect or any possible implementation of the first aspect.

According to a fourth aspect, a control device is provided. The control device includes a module/unit configured to perform a function of the control device in the first aspect or any possible implementation of the first aspect. The module/unit may be implemented by hardware, or may be implemented by hardware by executing corresponding software.

According to a fifth aspect, a controlled device is provided. The controlled device includes a module/unit configured to perform a function of the controlled device in the first aspect or any possible implementation of the first aspect. The module/unit may be implemented by hardware, or may be implemented by hardware by executing corresponding software.

According to a sixth aspect, a control system is provided, including:
the control device according to the first aspect or any possible implementation of the first aspect; and
the m controlled devices according to the first aspect or any possible implementation of the first aspect.

The control device is wiredly connected to the m controlled devices by using a PLC technology, and m is a positive integer.

According to a seventh aspect, a computer-readable storage medium is provided. The computer-readable storage medium stores a computer program or instructions. When the computer program or the instructions are executed by a device, a function of the control device in the first aspect or any possible implementation of the first aspect is implemented; or a function of the controlled device in the first aspect or any possible implementation of the first aspect is implemented.

According to an eighth aspect, a computer program product is provided. When the computer program product runs on a device, the device is enabled to implement a function of the control device in the first aspect or any possible implementation of the first aspect; or the device implements a function of the controlled device in the first aspect or any possible implementation of the first aspect.

For technical effect that can be achieved in any one of the second aspect to the eighth aspect, refer to the descriptions of beneficial effect in the first aspect. Details are not described herein again.

### BRIEF DESCRIPTION OF DRAWINGS

FIG. 1 is a diagram of an architecture of a control system according to this application;
FIG. 2 is a diagram of layers of a transmission link in a control device according to this application;
FIG. 3 is a diagram of a whole-house interconnection scenario according to this application;
FIG. 4 is a schematic flowchart of a device control method according to this application;
FIG. 5 is a diagram of a mapping field in a PLC control instruction according to this application;
FIG. 6 is a schematic flowchart of network access registration of a controlled device according to this application;
FIG. 7 is a diagram of a structure of a control device according to this application;
FIG. 8 is a diagram of a structure of a controlled device according to this application; and
FIG. 9 is a diagram of a structure of a device according to this application.

### DESCRIPTION OF EMBODIMENTS

The following describes in detail embodiments of this application with reference to accompanying drawings.

Power line communication (power line communication, PLC), also referred to as power line carrier communication, is a communication manner specific to a power system. A power line (for example, a high-voltage power line, a medium-voltage power line, or a low-voltage power line) in the power system can be used as a medium for information transmission. The PLC technology relies on a power line network. In comparison with a wireless network that is easily affected by an obstacle, a power line carrier signal is stable and has better anti-interference performance. In addition, the power line network does not need to be re-routed, and therefore has low costs.

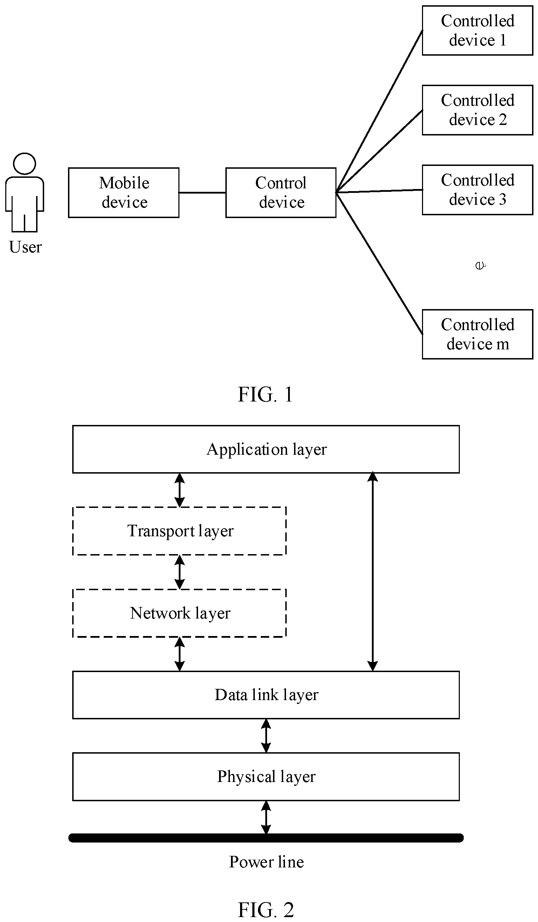

FIG. 1 is a diagram of an architecture of a control system. The control system includes a mobile device, a control device (control device), and m controlled devices (controlled devices). For example, the m controlled devices shown in FIG. 1 may be represented as a controlled device 1 to a controlled device m, where m is a positive integer.

The mobile device and the control device are connected through a local area network. For example, the mobile device and the control device are connected to a same WLAN, or both the mobile device and the control device are connected to a cloud server. The control device is wiredly connected to the m controlled devices by using a PLC technology.

The mobile device may also be referred to as a mobile station, a mobile terminal, user equipment (user equipment, UE), or the like. The mobile device includes a mobile phone, a tablet computer, a computer with a wireless transceiver function, a wearable device, and the like.

The control device is configured to send a PLC control instruction, and the PLC control instruction is used to control the controlled device to perform a corresponding action. The control device includes a control panel, a sensor, a control gateway, and the like. When sending the PLC control instruction, the control device may specifically broadcast the PLC control instruction, or unicast the PLC control instruction.

The controlled device is a smart sub-device. The controlled device is configured to receive the PLC control instruction that is broadcast by the control device, and perform the corresponding action according to the PLC control instruction. The controlled device includes smart devices such as a spotlight, a desk lamp, a curtain, an air conditioner, a smart screen, a speaker, and a player.

In this way, when sending the PLC control instruction, the control device may send the PLC control instruction in a wired manner. Compared with broadcasting in a wireless manner, this manner has a strong anti-interference capability, and helps increase a success rate of controlling the controlled device by the control device.

Based on the control system shown in FIG. 1, FIG. 2 is a diagram of an example of layers of a transmission link in the control device. The transmission link may be used by the control device to communicate with the controlled device through a power line. For example, the transmission link is used by the control device to send the PLC instruction to the controlled device through the power line.

Specifically, a physical layer (physical layer), a data link layer (data link layer), and an application layer (application layer) are sequentially constructed on the power line. The physical layer is mainly used to provide a physical connection for a data link layer through a transmission medium (that is, a power line), to implement transparent transmission of a bit stream. The data link layer is mainly used to convert, according to a PLC protocol, a physical channel with an error into an error-free data link that can reliably transmit a data frame. The application layer is mainly used to directly provide a service for a user, and complete various tasks that the user expects to complete on a network.

Optionally, there are a transport layer (transport layer) and a network layer (network layer) between the application layer and the data link layer. The transport layer is mainly used to shield details of data communication at a lower layer from a higher layer, that is, transparently transmit a packet to the user. The network layer is mainly used to select a most appropriate path for a packet or group through a communication subnet according to a route selection algorithm. The network layer controls information forwarding between the data link layer and the transport layer, and establishes, maintains, and terminates a network connection.

In a specific implementation, the physical layer, the data link layer, the network layer, and the transport layer may be implemented in a PLC chip. The PLC chip is configured to convert instruction data obtained from the application layer into a PLC instruction that can be transmitted through the power line, and then send the PLC instruction to the controlled device through the power line. The PLC chip is a chip in the control device.

It may be understood that, for a diagram of layers of a transmission link in the controlled device, refer to FIG. 2. The transmission link may be used by the controlled device to communicate with the control device through the power line. For example, the transmission link may be used by the controlled device to receive a PLC instruction from the control device through the power line. For explanations of the layers of the transmission link in the controlled device, refer to the foregoing explanations of the layers of the transmission link in the control device. Details are not described again.

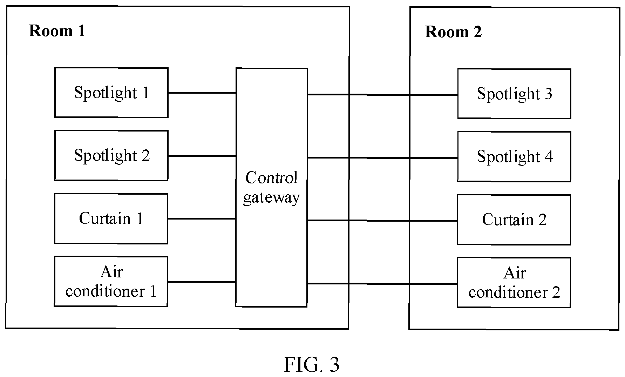

The control system shown in FIG. 1 may be applied to a whole-house interconnection scenario, and the control system applied to the whole-house interconnection scenario may be referred to as a smart home system. FIG. 3 is a diagram of an example of a whole-house interconnection scenario according to this application. The scenario includes a room 1 and a room 2. Controlled devices in the room 1 include a spotlight 1, a spotlight 2, a curtain 1, and an air conditioner 1. Controlled devices in the room 2 include a spotlight 3, a spotlight 4, a curtain 2, and an air conditioner 2. The control device is specifically, for example, a control gateway, and the control gateway is disposed in the room 1. The control gateway is wiredly connected to the controlled devices in each room by using the PLC technology.

The user may control the m controlled devices by performing an operation on the mobile device. For example, with reference to FIG. 1 and FIG. 3, the user expects to turn on the spotlight 1 to the spotlight 4 by performing an operation on the mobile device. The user may select the spotlight 1 to the spotlight 4 on a display interface of the mobile device, and then the mobile device generates a user instruction, where the user instruction includes identifiers of the spotlight 1 to the spotlight 4 (denoted as target controlled devices). The mobile device sends the user instruction to the control device.

Correspondingly, the control device determines device addresses of the spotlight 1 to the spotlight 4 based on the identifiers of the spotlight 1 to the spotlight 4 in the user instruction. The control device generates a PLC control instruction. The PLC control instruction includes the device addresses of the spotlight 1 to the spotlight 4. Then, the control device broadcasts the PLC control instruction. The PLC control instruction may be received by each controlled device in the whole-house interconnection scenario. Each controlled device determines whether a device address of the controlled device is included in the PLC control instruction, and further determines whether to perform an action according to the PLC control instruction. For example, after receiving the PLC control instruction, the spotlight 1 determines that a device address of the spotlight 1 is included in the PLC control instruction, and then performs an action according to the PLC control instruction. For another example, after receiving the PLC control instruction, the curtain 1 determines that a device address of the curtain 1 is not included in the PLC control instruction, and therefore discards the PLC control instruction, that is, does not perform an action according to the PLC control instruction.

It should be additionally noted that, in the PLC control instruction, a device address of a target controlled device usually occupies 2 bytes. For example, if there are n target controlled devices, device addresses of the target devices in the PLC control instruction need to occupy 2n bytes in total. For example, if n=10, device addresses of the target devices in the PLC control instruction need to occupy 20 bytes in total. For another example, if n=100, device addresses of the target devices in the PLC control instruction need to occupy 200 bytes in total.

It may be understood that, as the quantity n of target controlled devices gradually increases, a total quantity of bytes occupied by device addresses of the target devices in the PLC control instruction also gradually increases, that is, a packet length of the PLC control instruction is longer. With development of the whole-house smart home industry, the quantity m of controlled devices in the control system is increasing. Correspondingly, the quantity n of target controlled devices that need to be controlled by one PLC control instruction is also increasing.

Therefore, this application provides a device control method. In the device control method, a PLC control instruction generated by a control device includes k bits, where k is a preset integer greater than or equal to m. The control device may respectively map device addresses of m controlled devices to m bits in the k bits. In this way, the PLC control instruction may indicate, based on a value assigned to a bit corresponding to each controlled device, whether the controlled device is a target controlled device. In this manner, even if all the m controlled devices are target controlled devices, only the k bits in the PLC control instruction need to be used for indication. This helps reduce a packet length of the PLC control instruction and avoid congestion of a PLC line.

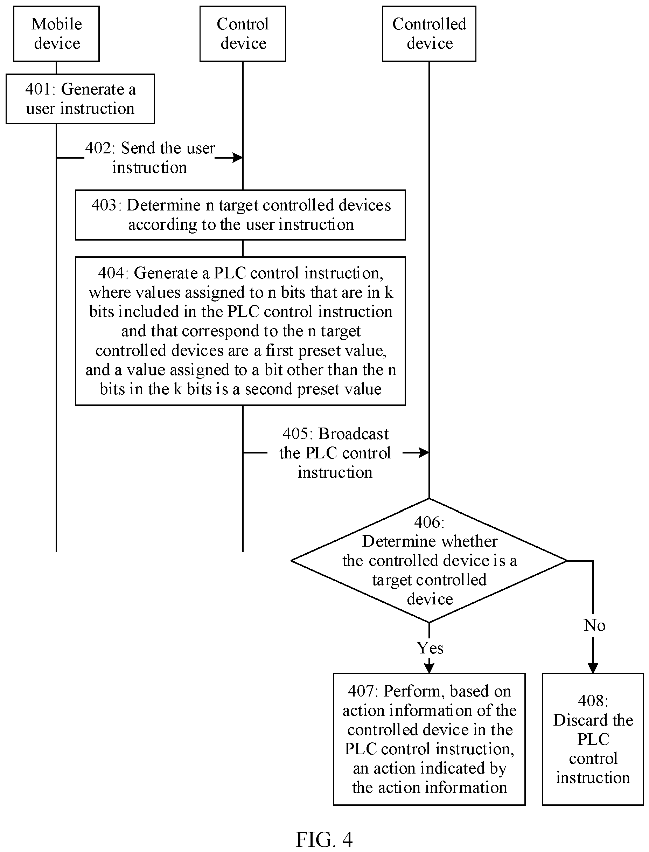

FIG. 4 is a schematic flowchart of the device control method.

Step 401: A mobile device generates a user instruction.

Specifically, when a user performs an operation on the mobile device, the mobile device generates, in response to the operation of the user, the user instruction corresponding to the operation, where the user instruction may indicate n target controlled devices in the m controlled devices and actions to be performed by the target controlled devices.

For example, a plurality of preset scenarios and control information corresponding to the plurality of preset scenarios are preconfigured in the mobile device. Control information of each preset scenario includes identifiers of one or more controlled devices and action information of the one or more controlled devices. The identifier of the controlled device is, for example, a medium access control (medium access control, MAC) address or a product serial number (serial number, SN) of the controlled device. The action information of the controlled device indicates an action to be performed by the controlled device.

When the user selects a preset scenario (denoted as a target scenario) in the plurality of preset scenarios on a display interface of the mobile device, the mobile device may generate a user instruction based on control information corresponding to the target scenario, where the user instruction includes an identifier of a controlled device (namely, a target controlled device) in the target scenario and action information of the controlled device.

For example, 18 controlled devices are separately connected to the control device by using a PLC technology, and the 18 controlled devices are respectively denoted as a controlled device 1 to a controlled device 18. Further, a scenario 1 to a scenario 5 are preset in the mobile device, and the scenario 1 to the scenario 5 respectively correspond to control information 1 to control information 5. The control information 1 includes an identifier and action information of each controlled device in the controlled device 1 to the controlled device 10. The control information 2 includes an identifier and action information of each controlled device in the controlled device 5 to the controlled device 10. The control information 3 includes an identifier and action information of each controlled device in the controlled device 9 to the controlled device 18. When the user selects the scenario 1 on the display interface of the mobile device, the mobile device determines the control information 1 based on the scenario 1, and further generates a user instruction based on the control information 1, where the user instruction may include the identifier and the action information of each controlled device in the controlled device 1 to the controlled device 10. In this example, m=18, and n=10.

Step 402: The mobile device sends the user instruction to the control device. Correspondingly, the control device receives the user instruction from the mobile device.

In a possible manner, the mobile device is connected to a WLAN of a router. The router may be integrated into the control device (in other words, the router is a part of the control device), or the router may be connected to the control device through a network cable.

Specifically, when the router is integrated into the control device, the router receives the user instruction from the mobile device, and forwards the user instruction to the control device; or when the router is connected to the control device through the network cable, the router in the control device (namely, the control device) receives the user instruction from the mobile device.

In addition, the mobile device may also access the router by using a dynamic domain name server (dynamic domain name server, DDNS) technology, to send the user instruction to the router through a mobile data network (for example, a 4G network, a 5G network, or a future 6G network).

In another possible manner, both the mobile device and the control device are connected to a cloud server, and the mobile device sends the user instruction to the control device through the cloud server.

For example, both the mobile device and the control device are connected to a same cloud server, the mobile device sends the user instruction to the cloud server, and the cloud server forwards the user instruction to the control device.

For another example, the mobile device and the control device are respectively connected to two cloud servers, and there is a communication link between the two cloud servers. For example, the mobile device is connected to a cloud server 1, the control device is connected to a cloud server 2, and there is a communication link between the cloud server 1 and the cloud server 2. The mobile device sends the user instruction to the cloud server 1, the cloud server 1 forwards the user instruction to the cloud server 2, and the cloud server 2 forwards the user instruction to the control device.

Step 403: The control device determines the n target controlled devices according to the user instruction.

In a specific implementation, the control device obtains identifiers of the n target controlled devices from the user instruction, and determines device addresses of the n target controlled devices based on the identifiers of the n target controlled devices. The device address of the controlled device is specifically an address that is in a PLC network and that is allocated by the control device to the controlled device.

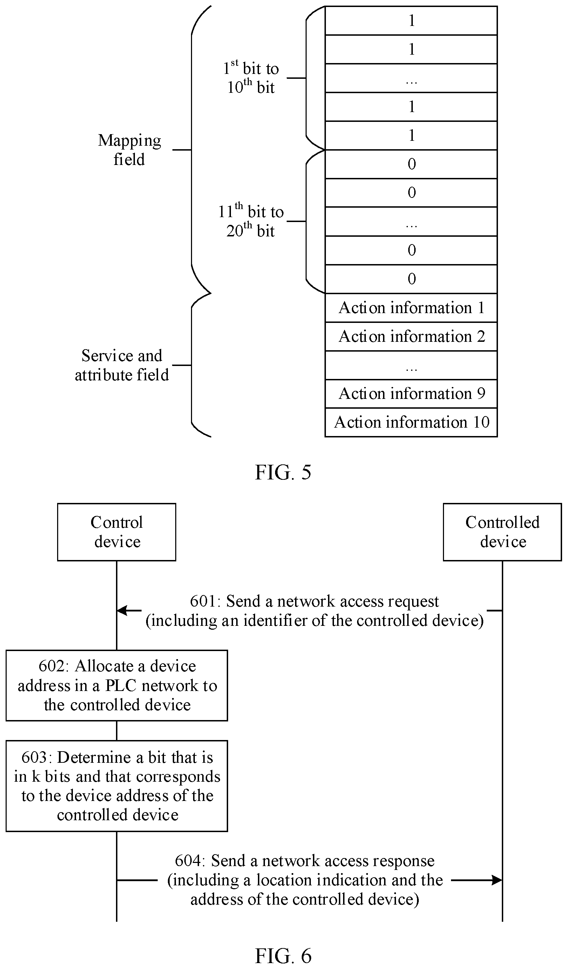

Optionally, the control device records a correspondence between an identifier of each of the m controlled devices and a device address of the controlled device. The correspondence may be established by the control device in a process in which the controlled device registers with the control device for network access. For a process of network access registration, refer to descriptions in the following embodiment related to FIG. 6.

With reference to the example in step 401, the user instruction includes the identifier of each controlled device in the controlled device 1 to the controlled device 10, and the control device may further determine a device address of each controlled device in the controlled device 1 to the controlled device 10.

Step 404: The control device generates a PLC control instruction.

The PLC control instruction includes k bits. Values assigned to n bits that are in the k bits and that correspond to the n target controlled devices are a first preset value, and a value assigned to a bit other than the n bits in the k bits is a second preset value. The first preset value is different from the second preset value.

It may be understood that, when a value assigned to a bit is the first preset value, it indicates that a controlled device corresponding to the bit is a target controlled device; or when a value assigned to a bit is the second preset value, it indicates that a controlled device corresponding to the bit is not a target controlled device.

The first preset value is 1, and the second preset value is 0; or the first preset value is 0, and the second preset value is 1.

For ease of description, a field including the k bits may be referred to as a mapping field. In other words, the PLC control instruction includes the mapping field, and the mapping field indicates the n target controlled devices in the m controlled devices.

Further description is provided with reference to the example in step 401. It is assumed that the mapping field in the PLC control instruction includes 20 bits (that is, k=20), and the control device is wiredly connected to the 18 controlled devices by using the PLC technology. The 18 controlled devices include 10 target controlled devices: the controlled device 1 to the controlled device 10.

For the mapping field in the PLC control instruction, refer to FIG. 5.

Specifically, the controlled device 1 to the controlled device 10 correspond to first 10 bits, and values assigned to the 10 bits are all 1, which indicates that the controlled device 1 to the controlled device 10 are all target controlled devices.

The controlled device 11 to the controlled device 18 correspond to an 11th bit to an 18th bit, and values assigned to the eight bits are all 0, which indicates that none of the controlled device 11 to the controlled device 18 is a target controlled device.

Herein, no controlled device corresponds to a 19th bit and a 20th bit, and values assigned to the 19th bit and the 20th bit are both 0.

Optionally, the PLC control instruction further includes a service and attribute field. The service and attribute field includes the action information of each target controlled device, and the action information of the target controlled device indicates an action to be performed by the target controlled device. Further description is provided with reference to the example in step 401. The PLC control instruction further includes action information, corresponding to the controlled device 1 to the controlled device 10, following the mapping field. The action information corresponding to the controlled device 1 to the controlled device 10 is denoted as action information 1 to action information 10. For details of the action information 1 to the action information 10, refer to FIG. 5.

It should be additionally noted that, when the control device generates the PLC control instruction, the control device needs to first determine, based on mapping information and the device addresses of the m controlled devices, a bit to which each of the m controlled devices (or the device address of the controlled device) is mapped in the k bits, and then determine a value assigned to the bit corresponding to the controlled device. Then, the control device generates the PLC control instruction based on values assigned to the k bits.

It may be understood that the mapping information includes a device address of each controlled device and a mapping relationship between the device address and a bit. With reference to the example in FIG. 5, device addresses of the controlled device 1 to the controlled device 18 are respectively denoted as A1 to A18. For a mapping relationship, refer to Table 1. A1 corresponds to the 1st bit, A2 corresponds to the 2nd bit, ..., A17 corresponds to the 17th bit, and A18 corresponds to the 18th bit. No device address corresponds to the 19th bit and the 20th bit, and the device address in the mapping relationship is represented by "--".

**Table 1**

| Device address | Bit |
|---|---|
| A1 | 1^{st} bit |
| A2 | 2^{nd} bit |
| A3 | 3^{rd} bit |
| ... | ... |
| A16 | 16^{th} bit |
| A17 | 17^{th} bit |
| A18 | 18^{th} bit |
| - | 19^{th} bit |
| - | 20^{th} bit |

A mapping relationship between a device address of a controlled device and a bit in the mapping information may be specifically established by the control device in a process in which the controlled device registers with the control device for network access. It may be understood that the controlled device needs to initiate a network access request to the control device. After verifying identity information of the controlled device, the control device adds the controlled device to the PLC network. In this way, the control device and the controlled device may communicate with each other according to the PLC protocol.

It should be additionally noted that a plurality of preset scenarios and control information corresponding to the plurality of preset scenarios may alternatively be preconfigured in the control device. Control information of each preset scenario includes identifiers of one or more controlled devices and action information of the one or more controlled devices. Correspondingly, the user instruction sent by the mobile device to the control device includes a target scenario, and the target scenario is one of the plurality of preset scenarios preconfigured in the control device. The control device determines, based on the target scenario, the plurality of preconfigured preset scenarios, and the preconfigured control information corresponding to the plurality of preset scenarios, control information corresponding to the target scenario, and further generates a PLC control instruction based on the action information of the one or more controlled devices and an identifier of a controlled device in the control information corresponding to the target scenario.

FIG. 6 is a schematic flowchart of an example of network access registration of a controlled device. One of the m controlled devices is used as an example for description.

Step 601: The controlled device sends the network access request to the control device. Correspondingly, the control device receives the network access request from the controlled device. The network access request includes an identifier of the controlled device.

Step 602: After obtaining the identifier of the controlled device from the network access request, the control device allocates an address in the PLC network to the controlled device, that is, a device address of the controlled device, and establishes a correspondence between the identifier and the device address of the controlled device.

In an example, the network access request further includes capability information of the controlled device, and the capability information indicates that the controlled device has a capability of parsing the PLC control instruction that carries the mapping field (referred to as a parsing capability for short). In still another example, after receiving the network access request from the controlled device, the control device sends a query request to the controlled device. The query request is used to query the capability information of the controlled device from the controlled device. Correspondingly, after receiving the query request, the controlled device sends a query response to the control device. The query response includes the capability information of the controlled device. For example, the capability information may also be indicated by a bit. For example, when a value assigned to the bit is 1, it indicates that the controlled device has the parsing capability; or when a value assigned to the bit is 0, it indicates that the controlled device has no parsing capability.

Optionally, the controlled device determines, based on a version number of the PLC protocol supported by the controlled device, whether the controlled device has the parsing capability, and further generates the capability information. For example, the controlled device receives a version number that is of the PLC protocol and that is broadcast by the control device. When determining that the version number supported by the controlled device is not lower than the version number that is broadcast by the control device, the controlled device determines that the controlled device has the parsing capability. When determining that the version number supported by the controlled device is lower than the version number that is broadcast by the control device, the controlled device determines that the controlled device has no parsing capability.

Step 603: The control device determines a bit that is in the k bits and that corresponds to the device address of the controlled device.

Optionally, the control device determines one or more bits that are in the k bits and that have not established a mapping relationship, and then selects one bit from the one or more bits, to establish a mapping relationship between the bit and the device address of the controlled device. For example, k=20. After receiving a network access request from the controlled device 15, the control device determines that the 15th bit to the 20th bit in the current 20 bits have not established a mapping relationship. In this case, the control device may establish a mapping relationship between the 15th bit and a device address of the controlled device 15.

It may be understood that the control device may establish the mapping information based on the device address of each controlled device and a bit that is in the k bits and that corresponds to the device address of the controlled device. For the mapping information, refer to Table 1.

It should be additionally noted that the quantity k of bits in the mapping field in the PLC control instruction is preset, in other words, a length of the mapping field in the PLC control instruction is a preset length. For example, k may be set to 128, to be specific, a maximum of 128 controlled devices may be connected to one control device. For another example, k may be set to 256, to be specific, a maximum of 256 controlled devices may be connected to one control device. Certainly, k may alternatively be set to another value. This is not limited in this application.

Further, when the total quantity m of controlled devices connected to the control device is equal to k, the m bits included in the mapping field respectively correspond to the m controlled devices. Correspondingly, before generating the PLC control instruction, the control device sets values of the m bits based on the n target controlled devices in the m controlled devices, and further generates the PLC control instruction based on the values of the m bits.

When the total quantity m of controlled devices connected to the control device is less than k, remaining (k-m) bits in the mapping field are not allocated to corresponding controlled devices. Correspondingly, before generating the PLC control instruction, the control device sets values of the m bits based on the n target controlled devices in the m controlled devices, and then assigns random values to the remaining (k-m) bits. The random value may be the first preset value or the second preset value. For example, the second preset value is assigned to the remaining (k-m) bits. Then, the control device generates the PLC control instruction based on the values of the k bits.

Step 604: The control device sends a network access response to the controlled device.

The network access response includes the device address of the controlled device and a location indication, and the location indication indicates the bit that is in the k bits and that corresponds to the device address of the controlled device. Correspondingly, the controlled device receives the network access response from the control device, and obtains the device address of the controlled device and the location indication from the network access response.

For example, the location indication may be specifically a number of the bit that is in the k bits and that corresponds to the device address of the controlled device. With reference to the example in step 602, the location indication is specifically "15th bit".

With reference to the example in Table 1, the controlled device 1 stores the device address "A1" and the location indication "1st bit", the controlled device 2 stores the device address "A2" and the location indication "2nd bit", and the controlled device 3 stores the device address "A3" and the location indication "3rd bit", and the like.

It should be additionally noted that the control device may alternatively allocate the device address and/or the bit to the controlled device in another manner. In other words, the control device may alternatively send the device address and/or the bit to the controlled device in another message type. The message type is not limited in this application.

Step 405: The control device broadcasts the PLC control instruction.

In other words, the control device broadcasts the PLC control instruction to the m controlled devices. Correspondingly, each of the m controlled devices receives the PLC control instruction from the control device. When broadcasting the PLC control instruction, the control device may specifically send, according to the PLC protocol, the PLC control instruction to the m controlled devices through a power line in a control system.

Step 406: Each of the m controlled devices determines whether the controlled device is the target controlled device. If the controlled device is the target controlled device, perform step 407; otherwise, perform step 408.

Specifically, after receiving the PLC control instruction, each of the m controlled devices obtains the mapping field from the PLC control instruction, determines, from the mapping field, a bit corresponding to the controlled device, and further determines, based on a value assigned to the determined bit, whether the controlled device is the target controlled device.

One of the m controlled devices is used as an example. If the controlled device determines that a value assigned to a bit corresponding to the controlled device is the first preset value, the controlled device determines that the controlled device is the target controlled device. If the controlled device determines that a value assigned to a bit corresponding to the controlled device is the second preset value, the controlled device determines that the controlled device is not the target controlled device.

With reference to the examples in Table 1 and FIG. 5, after receiving the PLC control instruction, the controlled device 1 determines, based on the mapping field of the PLC control instruction, that a value assigned to the 1st bit is 1, and further determines that the controlled device 1 is the target controlled device. After receiving the PLC control instruction, the controlled device 11 determines, based on the mapping field of the PLC control instruction, that a value assigned to the 11th bit is 0, and further determines that the controlled device 11 is not the target controlled device. Further, the controlled device 2 to the controlled device 10 may also receive the PLC control instruction, and determining logic of each controlled device is similar to that of the controlled device 1. The controlled device 12 to the controlled device 18 may also receive the PLC control instruction, and determining logic of each controlled device is similar to that of the controlled device 2.

Step 407: The controlled device performs, based on the action information of the controlled device in the PLC control instruction, an action indicated by the action information.

Specifically, the controlled device then obtains the action information of the controlled device from the service and attribute field included in the PLC control instruction, and further performs, based on the action information of the controlled device, the action indicated by the action information. The action information of the controlled device may indicate to enable or disable the controlled device, indicate a working mode of the controlled device, or the like. For example, the controlled device is a spotlight, and action information of the spotlight may indicate to turn on or turn off the spotlight; or the controlled device is an air conditioner, and action information of the air conditioner may indicate that a working mode of the air conditioner is any one of refrigeration, heating, dehumidification, and ventilation.

Optionally, after performing the action indicated by the action information, the controlled device sends a completion response to the control device. Correspondingly, after receiving the completion response from the controlled device, the control device further sends the completion response to the mobile terminal.

Step 408: The controlled device discards the PLC control instruction.

It should be additionally noted, for ease of representation, FIG. 4 shows only an example of an action of one controlled device. In this application, each of the m controlled devices performs determining in step 406, and then performs step 407 or step 408 based on a determining result in step 406.

It should be additionally noted that, considering that a mapping field with a fixed length (that is, k bits) is newly added to the PLC control instruction, before generating the PLC control instruction, the control device may perform the following determining step:
The control device determines whether the quantity n of target controlled devices is greater than a threshold, where the threshold is determined based on the total quantity k of bits in the PLC control instruction and a quantity of bits of the device addresses of the controlled devices.

This is explained as follows: The mapping field (that is, k bits) with the fixed length is newly added to the PLC control instruction. In other words, regardless of the quantity n of target controlled devices, when controlling the n target controlled devices, the control device needs to broadcast the PLC control instruction (which may be denoted as a first PLC control instruction) including the mapping field (that is, k bits). When the quantity n of target controlled devices is greater than the threshold, a length of the first PLC control instruction is less than a length of the PLC control instruction (denoted as a second PLC control instruction) including the device address of the target controlled device.

An example in which k=128 is used for description. The mapping field with the fixed length (that is, 128 bits) is newly added to the PLC control instruction. When there is only one target controlled device, it is assumed that the control device generates the first PLC control instruction, and the generated first PLC control instruction includes 128 bits. A value assigned to only one bit in the 128 bits is the first preset value, and values assigned to remaining 127 bits are all the second preset value. It is assumed that the control device generates the second PLC control instruction, and the generated second PLC control instruction includes a device address of one target controlled device, that is, two bytes (equal to 16 bits) are occupied. That is, when there is only one target controlled device, a packet length of the first PLC control instruction is greater than a packet length of the second PLC control instruction. The control device may select the second PLC control instruction to control the target controlled device.

When there are 100 target controlled devices, it is assumed that the control device generates the first PLC control instruction, and the generated first PLC control instruction includes 128 bits. Values assigned to 100 bits in the 128 bits are the first preset value, and values assigned to the remaining 28 bits are all the second preset value. It is assumed that the control device generates the second PLC control instruction, and the generated second PLC control instruction includes device addresses of the 100 target controlled devices, that is, 200 bytes (equal to 1600 bits) are occupied. That is, when there are 100 target controlled devices, a packet length of the first PLC control instruction is less than a packet length of the second PLC control instruction. The control device may select the first PLC control instruction to control the target controlled device.

It can be learned that the control device may determine, based on the quantity n of target controlled devices and the threshold, whether to generate the first PLC control instruction or the second PLC control instruction. Specifically, the control device generates the first PLC control instruction when it is determined that the quantity n of target controlled devices is greater than the threshold; or the control device generates the second PLC control instruction when it is determined that the quantity n of target controlled devices is less than or equal to the threshold. Certainly, the control device may alternatively generate the first PLC control instruction when it is determined that the quantity n of target controlled devices is greater than or equal to the threshold, or generate the second PLC control instruction when it is determined that the quantity n of target controlled devices is less than the threshold. This is not limited in this application.

For example, the threshold is equal to a ratio of k to the quantity of bits occupied by the device addresses. With reference to the foregoing example, k=128, and the quantity of bits occupied by the device address is 16. In this case, the threshold is equal to 8. Further, the control device generates the first PLC control instruction when it is determined that the quantity n of target controlled devices is greater than 8; or the control device generates the second PLC control instruction when it is determined that the quantity n of target controlled devices is less than or equal to 8.

In the foregoing technical solution, the control device determines, based on the quantity n of target controlled devices and the threshold, to generate the first PLC control instruction or the second PLC control instruction, that is, the control device generates a PLC control instruction with a small packet length. In this way, the packet length of the PLC control instruction is further reduced, and congestion of a PLC line is avoided.

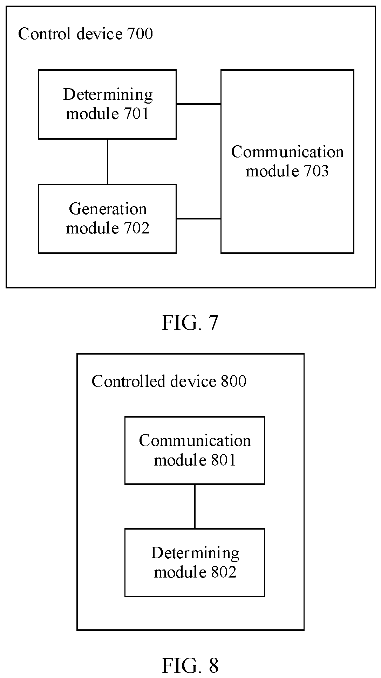

Based on the foregoing content and a same concept, FIG. 7 is a diagram of a structure of a control device 700 according to this application. The control device 700 may be configured to implement a function of the control device in the foregoing method embodiments. The control device 700 is, for example, the control device in FIG. 1 or the control gateway in FIG. 3. Therefore, beneficial effect of the foregoing method embodiments can also be achieved.

The control device 700 includes:
a determining module 701, configured to determine n target controlled devices, where the n target controlled devices are n controlled devices in m controlled devices, n is a positive integer, and n is not greater than m;
a generation module 702, configured to generate a PLC control instruction, where the PLC control instruction includes k bits, values assigned to n bits that are in the k bits and that correspond to the n target controlled devices are a first preset value, a value assigned to a bit other than the n bits in the k bits is a second preset value, the first preset value is different from the second preset value, and k is a preset integer greater than or equal to m; and
a communication module 703, configured to broadcast the PLC control instruction.

In a possible implementation, the communication module 703 is further configured to receive a user instruction from a mobile device, where the user instruction includes identifiers of the n target controlled devices. When determining the n target controlled devices, the determining module 701 is specifically configured to determine the n target controlled devices based on the identifiers of the n target controlled devices.

In a possible implementation, when generating the PLC control instruction, the generation module 702 is specifically configured to generate the PLC control instruction based on device addresses of the n target controlled devices and mapping information. The mapping information indicates m bits that are in the k bits and that respectively correspond to device addresses of the m controlled devices.

In a possible implementation, before the generation module 702 generates the PLC control instruction, the communication module 703 is further configured to obtain a device address of each of the m controlled devices; and the generation module 702 is further configured to determine a bit that is in the k bits and that corresponds to the device address of each controlled device, and establish mapping information based on the bit that is in the k bits and that corresponds to the device address of each controlled device.

In a possible implementation, after the generation module 702 determines the bit that is in the k bits and that corresponds to the device address of the controlled device, the communication module 703 is further configured to send a location indication to the controlled device. The location indication indicates the bit that is in the k bits and that corresponds to the device address of the controlled device.

In a possible implementation, the communication module 703 is further configured to obtain capability information of each of the m controlled devices. The capability information indicates that the controlled device has a capability of parsing the PLC control instruction.

In a possible implementation, before generating the PLC control instruction, the generation module 702 is further configured to determine that the quantity n of target controlled devices is greater than a threshold. The threshold is determined based on the total quantity k of bits in the PLC control instruction and a quantity of bits of the device addresses of the controlled devices.

Based on the foregoing content and a same concept, FIG. 8 is a diagram of a structure of a controlled device 800 according to this application. The controlled device 800 may be configured to implement a function of the controlled device in the foregoing method embodiments. The controlled device 800 is, for example, the controlled device shown in FIG. 1 or FIG. 3. Therefore, beneficial effect of the foregoing method embodiments can also be achieved.

The controlled device 800 includes:
a communication module 801, configured to receive a PLC control instruction that is broadcast by a control device, where the PLC control instruction includes k bits, values assigned to n bits that are in the k bits and that correspond to n target controlled devices are a first preset value, a value assigned to a bit other than the n bits in the k bits is a second preset value, the first preset value is different from the second preset value, k is a preset integer greater than or equal to m, the n target controlled devices are n controlled devices in the m controlled devices, and n is a positive integer; and
a determining module 802, configured to determine, based on a value assigned to a bit corresponding to the controlled device in the PLC control instruction, whether the controlled device is a target controlled device.

In a possible implementation, before receiving the PLC control instruction that is broadcast by the control device, the communication module 801 is further configured to receive a location indication from the control device. The location indication indicates the bit that is in the k bits and that corresponds to a device address of the controlled device.

In a possible implementation, the communication module 801 is further configured to send capability information of the controlled device to the control device. The capability information indicates that the controlled device has a capability of parsing the PLC control instruction.

In a possible implementation, when determining, based on the value assigned to the bit corresponding to the controlled device in the PLC control instruction, whether the controlled device is the target controlled device, the determining module 802 is specifically configured to: determine, based on the location indication from the control device, the value assigned to the bit that is in the k bits and that corresponds to the device address of the controlled device; and when determining that the value assigned to the bit that is in the k bits and that corresponds to the device address of the controlled device is the first preset value, determine that the controlled device is the target controlled device; or when determining that the value assigned to the bit that is in the k bits and that corresponds to the device address of the controlled device is the second preset value, determine that the controlled device is not the target controlled device.

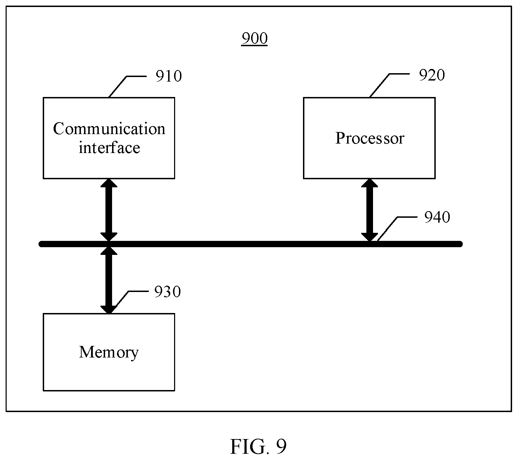

As shown in FIG. 9, some other embodiments of this application disclose a device 900. The device 900 may be the control device shown in FIG. 7, or may be the controlled device shown in FIG. 8.

Refer to FIG. 9. The device 900 includes a communication interface 910, a processor 920, and a memory 930. The communication interface 910, the processor 920, and the memory 930 are connected to each other.

It should be understood that the communication interface 910 is configured to perform the steps performed by the communication module 703 in the embodiment shown in FIG. 7. The processor 920 is configured to perform the steps performed by the determining module 701 or the generation module 702 in the embodiment shown in FIG. 7.

It should be understood that the communication interface 910 is configured to perform the steps performed by the communication module 801 in the embodiment shown in FIG. 8. The processor 920 is configured to perform the steps performed by the determining module 802 in the embodiment shown in FIG. 8.

Optionally, the communication interface 910, the processor 920, and the memory 930 are connected to each other through a bus 940. The bus 940 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used to represent the bus in FIG. 9, but this does not mean that there is only one bus or only one type of bus.

The memory 930 is configured to store program instructions, data, and the like. Specifically, the program instructions may include program code, and the program code includes computer operation instructions. The memory 930 may include a random access memory (random access memory, RAM), or may further include a non-volatile memory (non-volatile memory), for example, at least one disk memory. The processor 920 executes the program instructions and the data that are stored in the memory 930, to implement the foregoing functions, thereby implementing the methods provided in the foregoing embodiments.

In this embodiment of this application, the processor 920 may be a general-purpose processor, a digital signal processor, an application-specific integrated circuit, a field programmable gate array or another programmable logic device, a discrete gate or a transistor logic device, or a discrete hardware component. The processor 920 may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module. The software module may be located in the memory 930. The processor 920 reads the program instructions in the memory 930, and completes the steps in the foregoing methods in combination with hardware of the processor 920.

In this embodiment of this application, the memory 930 may be a non-volatile memory, for example, a hard disk drive (hard disk drive, HDD) or a solid-state drive (solid-state drive, SSD), or may be a volatile memory (volatile memory) like a RAM. Alternatively, the memory may be any other medium that can be configured to carry or store expected program code in a form of an instruction or a data structure and that can be accessed by a computer, but is not limited thereto. Alternatively, the memory in embodiments of this application may be a circuit or any other apparatus that can implement a storage function, and is configured to store instructions and/or data.

It may be clearly understood by a person skilled in the art that, for the purpose of convenient and brief description, for detailed working processes of the foregoing described apparatuses and units, refer to corresponding processes in the foregoing method embodiments. Details are not described herein again.

Based on the foregoing content and a same concept, this application further provides a computer storage medium. The computer storage medium stores a computer program, and when the computer program is executed by a computer, the computer is enabled to perform the method provided in the foregoing embodiments.

Based on the foregoing content and a same concept, an embodiment of this application further provides a computer program product, including instructions. When the computer program product runs on a computer, the computer is enabled to perform the method provided in the foregoing embodiments.

Based on the foregoing content and a same concept, an embodiment of this application further provides a control system. The control system includes the control device in the foregoing method embodiments and the m controlled devices in the foregoing method embodiments. The control device is wiredly connected to the m controlled devices by using a PLC technology, and m is a positive integer.

Embodiments of this application are described with reference to the flowcharts and/or block diagrams of the method, the device (system), and the computer program product according to embodiments of this application. It should be understood that instructions may be used to implement each process and/or each block in the flowcharts and/or the block diagrams and a combination of a process and/or a block in the flowcharts and/or the block diagrams. These instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A device control method, applicable to a control device in a control system, wherein the control system comprises the control device and m controlled devices, the control device is wiredly connected to the m controlled devices by using a power line communication PLC technology, and m is a positive integer; and the method comprises:
determining, by the control device, n target controlled devices, wherein the n target controlled devices are n controlled devices in the m controlled devices, n is a positive integer, and n is not greater than m;
generating, by the control device, a PLC control instruction, wherein the PLC control instruction comprises k bits, values assigned to n bits that are in the k bits and that correspond to the n target controlled devices are a first preset value, a value assigned to a bit other than the n bits in the k bits is a second preset value, the first preset value is different from the second preset value, and k is a preset integer greater than or equal to m; and
broadcasting, by the control device, the PLC control instruction.

2. The method according to claim 1, wherein the determining, by the control device, n target controlled devices comprises:
receiving, by the control device, a user instruction from a mobile device, wherein the user instruction comprises identifiers of the n target controlled devices; and
determining, by the control device, the n target controlled devices based on the identifiers of the n target controlled devices.

3. The method according to claim 1 or 2, wherein the generating, by the control device, a PLC control instruction comprises:
generating, by the control device, the PLC control instruction based on device addresses of the n target controlled devices and mapping information, wherein the mapping information indicates m bits that are in the k bits and that respectively correspond to device addresses of the m controlled devices.

4. The method according to claim 3, wherein before the generating, by the control device, a PLC control instruction, the method further comprises:
obtaining, by the control device, a device address of each controlled device; and determining a bit that is in the k bits and that corresponds to the device address of the controlled device; and
establishing, by the control device, the mapping information.

5. The method according to claim 4, wherein after the determining, by the control device, a bit that is in the k bits and that corresponds to the device address of the controlled device, the method further comprises:
sending, by the control device, a location indication to the controlled device, wherein the location indication indicates the bit that is in the k bits and that corresponds to the device address of the controlled device.

6. The method according to claim 4, further comprising:
obtaining, by the control device, capability information of each controlled device, wherein the capability information indicates that the controlled device has a capability of parsing the PLC control instruction.

7. The method according to any one of claims 1 to 6, wherein before the generating, by the control device, a PLC control instruction, the method further comprises:
determining, by the control device, that the quantity n of target controlled devices is greater than a threshold, wherein the threshold is determined based on the total quantity k of bits in the PLC control instruction and a quantity of bits of the device addresses of the controlled devices.

8. A device control method, applicable to a controlled device in a control system, wherein the control system comprises a control device and m controlled devices, the control device is wiredly connected to the m controlled devices by using a power line communication PLC technology, m is a positive integer, and the controlled device is one of the m controlled devices; and
the method comprises:
receiving, by the controlled device, a PLC control instruction that is broadcast by the control device, wherein the PLC control instruction comprises k bits, values assigned to n bits that are in the k bits and that correspond to n target controlled devices are a first preset value, a value assigned to a bit other than the n bits in the k bits is a second preset value, the first preset value is different from the second preset value, k is a preset integer greater than or equal to m, the n target controlled devices are n controlled devices in the m controlled devices, n is a positive integer, and n is not greater than m; and
determining, by the controlled device based on a value assigned to a bit corresponding to the controlled device in the PLC control instruction, whether the controlled device is a target controlled device.

9. The method according to claim 8, wherein before the receiving, by the controlled device, a PLC control instruction that is broadcast by the control device, the method further comprises:
receiving, by the controlled device, a location indication from the control device, wherein the location indication indicates the bit that is in the k bits and that corresponds to a device address of the controlled device.

10. The method according to claim 8 or 9, further comprising:
sending, by the controlled device, capability information of the controlled device to the control device, wherein the capability information indicates that the controlled device has a capability of parsing the PLC control instruction.

11. The method according to any one of claims 8 to 10, wherein the determining, by the controlled device based on a value assigned to a bit corresponding to the controlled device in the PLC control instruction, whether the controlled device is a target controlled device comprises:
determining, by the controlled device based on the location indication from the control device, the value assigned to the bit that is in the k bits and that corresponds to the device address of the controlled device; and
when determining that the value assigned to the bit that is in the k bits and that corresponds to the device address of the controlled device is the first preset value, determining, by the controlled device, that the controlled device is the target controlled device; and/or
when determining that the value assigned to the bit that is in the k bits and that corresponds to the device address of the controlled device is the second preset value, determining, by the controlled device, that the controlled device is not the target controlled device.

12. A control device, comprising a processor and a memory, wherein the memory is configured to store a computer program, and the processor is configured to execute the computer program stored in the memory, so that the control device performs the method according to any one of claims 1 to 7.

13. A controlled device, comprising a processor and a memory, wherein the memory is configured to store a computer program, and the processor is configured to execute the computer program stored in the memory, so that the controlled device performs the method according to any one of claims 8 to 11.

14. A control system, comprising:
a control device and m controlled devices, wherein the control device is wiredly connected to the m controlled devices by using a power line communication PLC technology, and m is a positive integer;
the control device is configured to perform the method according to any one of claims 1 to 7; and
each of the m controlled devices is configured to perform the method according to any one of claims 8 to 11.

15. A computer-readable storage medium, wherein the computer-readable storage medium stores a computer program or instructions, and when the computer program or the instructions are executed by a device, the method according to any one of claims 1 to 7 is implemented or the method according to any one of claims 8 to 11 is implemented.
